# EUROPEAN PATENT SPECIFICATION

(11) **EP 1 484 659 B1**
(45) Date of publication and mention of the grant of the patent: **29.08.2007**
(21) Application number: 04013166.6
(22) Date of filing: 03.06.2004
(51) Int. Cl.: G05F 3/26

(54) **Variable output-type current source circuit**
Variable Ausgangstypstromquellenschaltung
Circuit de source de courant de sortie variable

(30) Priority: 06.06.2003 JP 2003162262
(43) Date of publication of application: 08.12.2004
(73) Proprietor: TOKO, INC., Ohta-ku, Tokyo (JP)
(72) Inventor: Tanigawa, Hiroshi, Tsurugashima-Shi Saitama (JP); Nakamura, Shuichi, Tsurugashima-Shi Saitama (JP); Yamane, Satoru, Tsurugashima-Shi Saitama (JP)
(74) Representative: Müller-Boré & Partner Patentanwälte

(56) References cited:
- US-A- 5 404 096
- US-A- 5 949 227
- US-A- 6 163 468
- US-A1- 2002 050 855
- RINCON-MORA G A: "Voltage References: From Diodes to Precision High-Order Bandgap Circuits" 2002, IEEE PRESS, WILEY , USA , XP002327208 ISBN: 0-471-14336-7 * paragraphs 2.2, 2.2.1, 2.2.2 ** figures 2.5a,2.6b *

## Description

### BACKGROUND OF THE INVENTION

### 1. FIELD OF THE INVENTION

The present invention relates to a constant current source circuit capable of varying its output current in a stepwise manner for allowing an output current value of a constant current source circuit to be sufficiently varied.

### 2. DESCRIPTION OF THE PRIOR ART

Document RINCON-MORA G A: "Voltage References: From Diodes to Precision High-Order Bandgap Circuits", 2002, IEEE PRESS, WILEY, USA, XP002327208 ISBN: 0-471-14336-7, par. 2.2, 2.2.1, 2.2.2, discloses current generators having a stable operating point. A start-up circuit is required to prevent them from settling in an undesired state, and ensures a nonzero current state by sourcing or sinking a minute amount of current to or from the current generator. The start-up current is normally significantly low and therefore does not need to be precisely controlled.

Document U.S. Patent No. 6,163,468 discloses a start-up current to a current generator. The start-up current includes an application circuit for applying the start-up current to the current generator and an ensuring circuit ensuring that the current generator is in a predetermined stable state before the start-up current is applied thereto. The ensuring circuit prevents a flow of current in the current generator prior to application of the start-up current so that the stable state is one in which current is not conducting.

An integrated circuit incorporating various electronic circuits in high-density packaging often has the need for supplying a stable current to each of the electronic circuits to prevent a supply voltage and other disturbances from adversely affecting on the operation thereof.

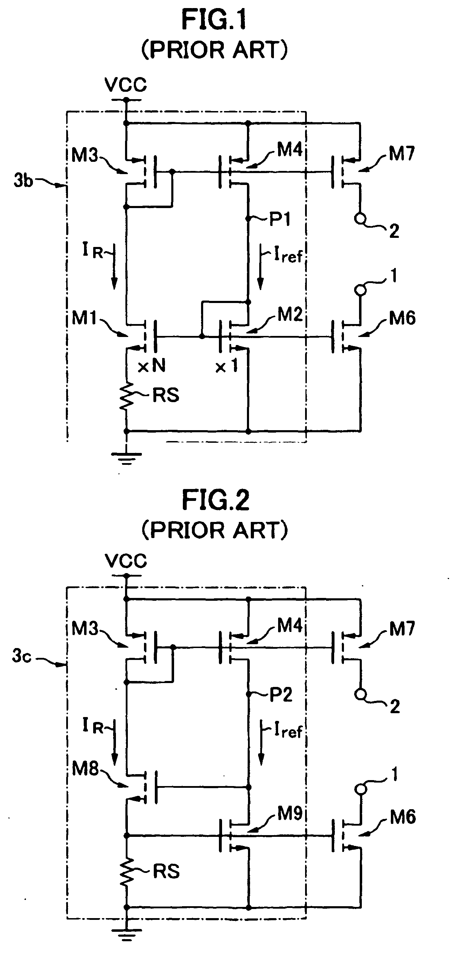

There have been known some constant current source circuits for providing a stable current to an electronic circuit, for example, as shown in FIGS. 1 and 2.

The constant current source circuit illustrated in FIG 1 as a first conventional example is configured as follows.

The respective gates of transistors M1 and M2 each composed of an N-channel type MOSFET are connected to one another through a common connection, and the transistor M2 is short-circuited between the drain and gate thereof. The source of the transistor M1 is connected to GND via a resistor RS, and the source of the transistor M2 is connected directly to GND. The respective gates of transistors M3 and M4 each composed of a P-channel type MOSFET are connected to one another through a common connection, and the transistor M3 is short-circuited between the drain and gate thereof Each of the sources of the transistors M3 and M4 is connected directly to a power supply point VCC.

The respective drains of the transistors M3 and M1 are connected to one another through a common connection, and the respective drains of the transistors M4 and M2 are connected to one another through a common connection. The transistors M1, M2, M3 and M4 and the resistor RS make up a self-biasing type constant current circuit 3b.

The transistor M1 is designed to have a channel size (the ratio of channel width W/channel length L) N times greater than that of the transistor M2. While each of the channel sizes of the transistors M3 and M4 may be selectively set at an appropriate value in practice, given that the transistors M3 and M4 have the same channel size only for the sake of simplicity (given that transistors M3 and M4 illustrated in another circuit diagram also have the same channel size).

The constant current source circuit also includes an output transistor M6 composed of an N-channel type MOSFET, and the gate of the output transistor M6 is connected to the gate of the transistor M2 through a common connection. The source of the output transistor M6 is connected to GND, and the drain of the output transistor M6 is connected to a first output terminal 1. The constant current source circuit further includes an output transistor M7 composed of a P-channel type MOSFET, and the gate of the output transistor M7 is connected to the gate of the transistor M4 through a common connection. The source of the output transistor M7 is connected to the power supply point VCC, and the drain of the output transistor M7 is connected to a second output terminal 2.

The constant current source circuit in FIG 1 operates as follows.

The transistors M3 and M4 are operable to allow a current to flow through the transistors M1 and M2 different in channel size, at the same value. Then, the transistors M1 and M2 operating in a cooperative manner under different current densities create a given voltage across the resistor RS. This voltage allow a highly stable current I_{R} (hereinafter referred to as "stabilized current") to flow through a line of the resistor RS and the transistors M1 and M3. Further, a reference current I_{ref} equal to the stabilized current I_{R} flows through a line of the transistors M2 and M4, and then an output current proportional to the reference current I_{ref} (= stabilized current I_{R}) is picked up from the output transistors M6 and M7.

The configuration and the operation of the circuit in FIG 1 are disclosed, for example, in "Design Techniques of Analog Integrated Circuits (Vol. 1)" co-authored by P. R. Grey and P. G. Meyer (pp 263-265, BAIFUKAN Co., Ltd., 12/15/1990), "Design Techniques of Analog Integrated Circuits (Vol. 2)" co-authored by P. R. Grey and P. G Meyer (pp 308-309, BAIFUKAN Co., Ltd., 12/15/1990), and Japanese Patent Laid-Open Publication No. 08-228114 or 2002-116831.

The constant current source circuit illustrated in FIG 2 as a second conventional example is configured as follows.

The gate of a transistor M8 composed of an N-channel type MOSFET is connected to the drain of a transistor M9 composed of an N-channel type MOSFET, and the source of the transistor M8 is connected to the gate of the transistor M9. The source of the transistor M9 is connected directly to GND, and the source of the transistor M8 is connected to GND via a resistor RS. The respective gates of transistors M3 and M4 each composed of a P-channel type MOSFET are connected to one another through a common connection, and the transistor M3 is short-circuited between the drain and gate thereof. Each of the sources of the transistors M3 and M4 is connected directly to a power supply point VCC.

The respective drains of the transistors M3 and M8 are connected to one another through a common connection, and the respective drains of the transistors M4 and M9 are connected to one another through a common connection. The transistors M3, M4, M8 and M9 and the resistor RS make up a self-biasing type constant current circuit 3c.

The constant current source circuit in FIG 2 operates as follows.

Based on the transistors M8 and M9 operating in a cooperative manner, a given voltage approximately equal to a threshold voltage Vₜₕ of the transistor M9 is created across the resistor RS. This voltage allows a stabilized current I_{R} to flow through a line of the resistor RS and the transistors M8 and M3. Further, a reference current I_{ref} equal to the stabilized current I_{R} flows through a line of the transistors M9 and M4, and then an output current proportional to the reference current I_{ref} (= stabilized current I_{R}) is picked up from output transistors M6 and M7.

The configuration and the operation of the circuit in FIG 2 are disclosed, for example, in "Design Techniques of Analog Integrated Circuits (Vol. 1)" co-authored by P. R. Grey and P. G Meyer (pp 259-263, BAIFUKAN Co., Ltd., 12/15/1990), "Design Techniques of Analog Integrated Circuits (Vol. 2)" co-authored by P. R. Grey and P. G Meyer (pp 305-307, BAIFUKAN Co., Ltd., 12/15/1990), and Japanese Patent Laid-Open Publication No. 2002-116831.

The constant current circuit having the configuration as shown in FIG 1 or 2 is operable to stabilize the circuit operation on a self-biasing basis. As used in the specification, the term "self-biasing" means a feedback control characterized in that, based on a current mirror operation between the transistors M3 and M4, the reference current I_{ref} flowing through the transistor M2 (or M9) is determined by the stabilized current I_{R} flowing through the transistor M1 (or M8). Such a self-biasing type constant current source circuit has two operation points allowing the circuit to be stably operated thereat (hereinafter referred to as "stable operation points"). Specifically, the stable operation points consist of one point where "the stabilized current = zero" and the other point where "the stabilized current = a given current value". In use of the circuit in FIG 1 or 2, one of the stable operation points where the stabilized current = zero involves the following problem.

Firstly, even if a power is simply supplied from the current supply point VCC to activate the circuit, no current will flow through the transistors M1, M2, M3 and M4 (or M8, M9, M3 and M4). If nothing is done, the circuit in FIG 1 (or FIG 2) will never be activated.

Thus, it is typically required to additionally provide an activation circuit for injecting a current into a connection node P1 (FIG 1) or P2 (FIG 2) in the circuit. The activation circuit is essentially configured such that the current injection into the connection node P1 or P2 is discontinued just after activation of the constant current source circuit so as not to interfere with the normal operation of the constant current circuit 3b or 3c.

Secondly, most of current electronic devices have a function of shifting a regular operation mode to another operation mode having a power consumption less than that in the regular operation mode (hereinafter referred to as "power saving operation mode") if the device is not operated for a predetermined period of time. A constant current source circuit for use in such electronic devices is desirably designed to switchably control an output current in such a manner that it is increased in the regular operation mode, and reduced in the power saving operation mode. However, the circuit in FIG 1 or 2 having only one stable operation point other than the point where the stabilized current = zero cannot vary the value of the output current if nothing is done. Thus, in order to vary the value of the output current, an additional control circuit for switching the output current is essentially provided between the output transistors M6, M7 and the constant current circuit 3b (or 3c) while bearing the disadvantage of complication in circuit configuration. One example of such a control circuit is disclosed, for example, in Japanese Patent Laid-Open Publication No. 08-241140.

The technology for starting up such a constant current source circuit is disclosed in U.S. Patent No. 5,949,227, which discloses a technology arranging a second constant current circuit for starting up a first self-biasing type constant current circuit. The circuit disclosed in U.S. Patent No. 5,949,227 has the constitution that the second constant current circuit stops automatically according to a switch (transistor 412) in cooperation with the first constant current circuit after starting it up. However, the circuit has the following problem to be solved in case of using the circuit as a constant current source mounted on an electronic apparatus.

The activation circuit or the control circuit additionally incorporated in the constant current circuit causes problems of the complication in circuit configuration and the increase in size of a semiconductor circuit board.

Further, while the resistor RS provided in the circuit in FIG 1 or 2 may be set at a larger resistance value to reduce the output current of the circuit, the output current can be actually reduced to about several hundred nA only after the resistance value of the resistor RS is set at several MΩ. If a high resistance element of several MΩ is formed on a semiconductor circuit board, it will undesirably occupy a fairly large area on the board.

### SUMMARY OF THE INVENTION

It is the object of the present invention to provide a constant current source circuit capable of varying its output current in a stepwise manner, which is free of complications in circuit configuration and the increase in size of a semiconductor circuit board for incorporating the circuit therein.

This object is fulfilled by a constant current source circuit having the features disclosed in claim 1. Preferred embodiments are defined in the dependent claims.

The constant current source circuit of the present invention allows the value of the output current to be varied two-stepwise in response to the switching operation in the transistor of the switching circuit. The value of the second stabilized current is determined by the characteristics of the depression-type sixth transistor. Thus, the sixth transistor can, for example, be selectively configured to allow the second stabilized current to have a minute value, so as to eliminate the need for setting the resistor at a high resistance value. This allows a minute output current to be obtained without increasing the size of a semiconductor board. In addition, the complication in circuit configuration can be certainly avoided.

Further, the sixth transistor of the second constant current circuit is maintained in its operative state because it is composed of a depression type MOSFET. Thus, when a power is supplied to the constant current source circuit, the sixth transistor draws a current through the third transistor. In response to the current passing through the third transistor, the first constant current circuit in its deactivated state is activated. In this manner, the second constant current circuit also serves as an activation circuit for the first constant current circuit. Thus, the constant current source circuit has no need for providing an additional activation circuit. In addition, as a mechanism for varying the output current, the constant current source circuit is additionally provided with only the second constant current circuit and the switching circuit. Thus, the constant current source circuit is free of the disadvantage of complication in circuit configuration.

Specifically, the first and second transistors are operable to cooperatively supply a given voltage across the resistor connected in series to the first transistor, to generate a stabilized current. The third and fourth transistors connected in series, respectively, to the first and second transistors are operable to allow the stabilized current to be correlated with a reference current. The first to fourth transistors and the resistor make up the first self-biasing type constant current circuit. In a preferred embodiment of the present invention, the constant current source circuit may include a first output transistor arranged to form a current mirror circuit in association with the second transistor, and a second output transistor arranged to form a current mirror circuit in association with the fourth transistor.

The constant current source circuit of the present invention further includes the switching circuit having the fifth transistor, and the second constant current circuit. The switching circuit is connected in series to a series circuit connecting in series the first transistor and the resistor, and the second constant current circuit is connected in parallel to a series circuit connecting in series the first transistor, the resistor and the fifth transistor.

In a preferred embodiment of the present invention, the fifth transistor constituting the switching circuit is turned on/off in response to a control signal which is externally supplied to a control terminal. Further, the second constant current circuit may be composed of a depression-type MOSFET which is short-circuited between the gate and source thereof.

In the above constant current source circuit, when the fifth transistor is turned on in response to the external control signal, the first constant current circuit performs a regular operation. During this regular operation, an output current obtained from the first and second output transistors has a value proportional to the sum of the respective stabilized currents of the first and second constant current circuits.

When the fifth transistor is turned off in response to the external control signal, the first constant current circuit loses the function of generating the stabilized current. During this operation, an output current obtained from the first and second output transistors has a value substantially proportional to the stabilized current of the second constant current circuit.

In an operation for activating the constant current source circuit, the second constant current circuit may also serve as an activation circuit for the first constant current circuit.

According to the above specific embodiment of the present invention, the value of the output current can be varied two-stepwise in response to the state of the switching circuit. The second constant current circuit may be composed of a depression-type transistor configured to allow a current flowing therethrough to be limited to a minute value, so as to prevent the complication in circuit configuration and the increase in size of a semiconductor circuit board. Furthermore, the second constant current circuit may be configured to serve as an activation circuit for the first constant current circuit, so as to provide an enhanced advantage of preventing the complication in circuit configuration and the increase in size of a semiconductor circuit board.

### BRIEF DESCRIPTION OF THE DRAWINGS

FIG 1 is a circuit diagram showing a first conventional example of a fundamental constant current source circuit.
FIG 2 is a circuit diagram showing a second conventional example of a fundamental constant current source circuit.
FIG 3 is a circuit diagram showing a variable output-type constant current source circuit according to one embodiment of the present invention.

### DESCRIPTION OF THE PREFERRED EMBODIMENTS

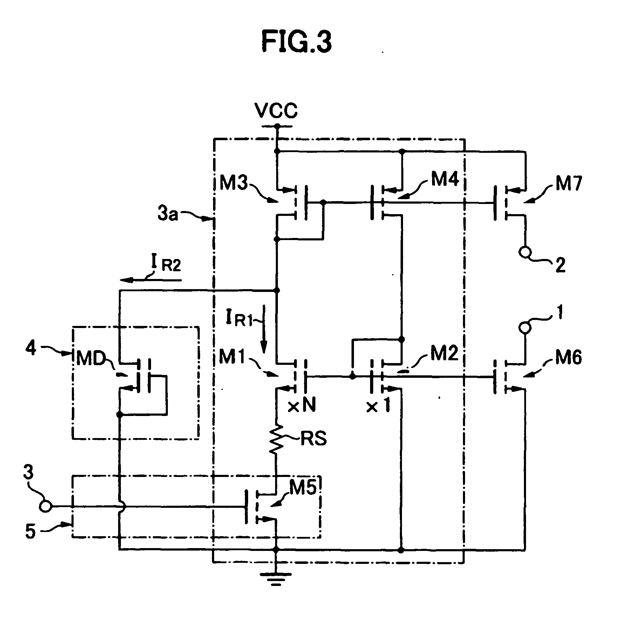

FIG 3 is a circuit diagram showing a variable output-type constant current source circuit capable of varying its output current in a stepwise manner, according to one embodiment of the present invention. The constant current source circuit in the FIG 3 is configured as follows.

The respective gates of transistors M1 and M2 each composed of an N-channel type MOSFET are connected to one another through a common connection, and the transistor M2 is short-circuited between the drain and gate thereof. The source of the transistor M1 is connected to GND via a resistor RS connected in series thereto and the main current path of a transistor M5, and the source of the transistor M2 is connected directly to GND. The gate of the transistor M5 is connected to a signal input terminal 3. The respective gates of transistors M3 and M4 each composed of a P-channel type MOSFET are connected to one another through a common connection, and the transistor M3 is short-circuited between the drain and gate thereof Each of the sources of the transistors M3 and M4 is connected directly to a power supply point VCC.

The respective drains of the transistors M3 and M1 are connected to one another through a common connection, and the respective drains of the transistors M4 and M2 are connected to one another through a common connection. The gate of an output transistor M6 composed of an N-channel type MOSFET is connected to the gate of the transistor M2 through a common connection. The output transistor M6 has a source connected to GND, and a drain connected to a first output terminal 1. The gate of an output transistor M7 composed of a P-channel type MOSFET is connected to the gate of the transistor M4 through a common connection. The output transistor M7 has a source connected to the power supply point VCC, and a drain connected to a second output terminal 2. The drain of a transistor MD composed of a depression/N-channel type MOSFET short-circuited between the gate and source thereof is connected to the drain of the transistor M1, and the source of the transistor MD is connected to GND

The transistor M5 makes up a switching circuit 5. The transistors M1, M2, M3, M4 and M5 and the resistor RS make up a first constant current circuit 3a, and the transistor MD makes up a second constant current circuit 4.

Given that the relationship between the respective channel sizes of the transistors M1, M2, M3, M6 and M7 in FIG 3 is the same as that of the conventional circuit in FIG 1.

Except that the transistor M5 is commented in series between the resistor RS and GND, and the main current path of the transistor MD is connected in parallel to the series circuit connecting in series the transistor M1, the resistor RS and the transistor M5, the configuration of the circuit in FIG 3 is substantially the same as that of the circuit in FIG 1. However, differently from the circuit in FIG 1, the circuit in FIG 3 configured as above is operable to vary its output current as follows.

When a control signal supplied through the signal input terminal 3 is in a High level, the transistor M5 of the switching circuit 5 goes into its ON state. In this mode, the constant current circuit 3a has substantially the same configuration as that of the constant current circuit 3b in FIG 1. That is, the transistors M1 and M2 operate in a cooperative manner under different current densities to generate a given voltage across the resistor RS. Thus, a first stabilized current I_{R1} having a value determined by the resistance value of the resistor RS and the value of the given voltage flows through a series circuit connecting in series the transistor M1, the resistor RS and the transistor M5.

During this mode, the transistor MD of the second constant current circuit 4 operates while maintaining the voltage V_{GS} between the gate and source thereof at a value of zero, and thereby a second stabilized current I_{R2} having a value determined by the characteristics of the depression-type transistor MD flows into the second constant current circuit 4. Thus, a combined current consisting of the sum of the first stabilized current I_{R1} flowing into the transistor M1 and the second stabilized current I_{R2} flowing into the transistor MD flows through the main current path of the transistor M3. A current flowing through the transistors M2, M4 has a value equal to that of the combined current, and thereby an output current picked up from the output transistors M6, M7 has a value proportional to the combined current (=I_{R1} + I_{R2}).

When the external control signal is in a Low level, the transistor M5 goes into its OFF state. In this mode, no current flows through the transistor M1 and the resistor RS. Thus, the first constant current circuit 3a loses the function of generating the first stabilized current I_{R1}. During this mode, only the second stabilized current I_{R2} flowing into the transistor MD flows through the main current path of the transistor M3. A current flowing through the transistors M2, M4 has a value equal to that of the second stabilized current I_{R2}, and thereby an output current picked up from the output transistors M6, M7 has a value proportional to the second stabilized current I_{R2}.

As above, the circuit in FIG 3 allows the value of the output current to be varied two-stepwise in response to the switching operation in the transistor M5 of the switching circuit 5.

In the above circuit, the value of the second stabilized current I_{R2} is determined by the characteristics of the depression-type transistor MD. Thus, the transistor MD can be selectively configured to allow the second stabilized current I_{R2} to have a minute value, for example, about several hundred nA, so as to eliminate the need for setting the resistor RS at a high resistance value. This allows a minute output current to be obtained without increasing the size of a semiconductor circuit board. In addition, the complication in circuit configuration can be certainly avoided.

The transistor MD constituting the second constant current circuit 4 is maintained in its operative state because it is composed of a depression-type MOSFET having a negative threshold, and short-circuited between the gate and source thereof. Thus, when a power is supplied from the power supply point VCC to the circuit in FIG 3, the transistor MD draws a current through the transistor M3. In response to the current passing through the transistor M3, the first constant current circuit 3a in its deactivated state is activated. In this manner, the second constant current circuit 4 also serves as an activation circuit for the first constant current circuit 3a. Thus, the circuit in FIG 3 has no need for providing an additional activation circuit. In addition, as a mechanism for varying the output current, the circuit in FIG 3 is additionally provided with only the second constant current circuit 4 (transistor MD) and the switching circuit 5 (transistor M5). Thus, the constant current source circuit is free of the disadvantage of complication in circuit configuration.

While the constant current source circuit in FIG 3 according to one embodiment of the present invention is configured by additionally incorporating the switching circuit 5 and the second constant current circuit into the constant current source circuit in FIG 1, the present invention is not limited to such a configuration. For example, the constant current source circuit of the present invention may be configured by additionally incorporating the switching circuit and the second constant current circuit into the constant current source circuit in FIG 2. In this case, a transistor constituting the switching circuit must be connected in series to a series circuit connecting in series the transistor M8 and the resistor RS, and the second constant current circuit 4 must be connected in parallel to a series circuit connecting in series the transistor M8, the resistor RS and the switching circuit.

Further, the second constant current circuit 4 composed of the depression-type transistor MD in the constant current source circuit in FIG. 3 according to the present invention is advantageous to the simplification of circuit configuration and the downsizing of a semiconductor circuit board.

## Claims

1. A constant current source circuit comprising:
a first and a second transistor (M1, M2) which are operable cooperatively;
a resistor (RS) connected in series to the first transistor (M1); and
a third and a fourth transistor (M3, M4) for supplying a current to said first and second transistors (M1, M2); wherein
the constant current source circuit is arranged so as to constitute a first self-biasing type constant current circuit (3a) in which a stabilized current is obtained;
said first self-biasing type constant current circuit (3a) comprising said resistor (RS) and said first transistor (M1) connected in series, said second transistor (M2) for supplying a given voltage across said resistor (RS) in cooperation with said first transistor (M1) to generate a first stabilized current (I_{R1}) which is a reference of an output current, said third transistor (M3) connected in series to said first transistor (M1), and said fourth transistor (M4) connected in series to said second transistor (M2) for forming a current mirror in cooperation with said third transistor (M3);
a switching circuit (5) is connected in series to said resistor (RS) and composed of a fifth transistor (M5) which is ON and OFF according to an external control signal; and
a second constant current circuit (4) composed of a sixth transistor (MD) of a MOSFET type connected in parallel to a series connection of said first transistor (M1), said resistor (RS) and said fifth transistor (M5) to generate a second stabilized current (I_{R2}), wherein said second stabilized current (I_{R2}) is a startup current for said first constant current circuit (3a) at starting-up time;
wherein said fifth transistor (M5) is adapted to vary a current passing through said second and fourth transistor (M2, M4), according to the state of said fifth transistor (M5), so as to vary an output current from said constant current source circuit;
**characterized in that** said sixth transistor (MD) is of a depression type; and
said second stabilized current (I_{R2}) is a reference current of an output current at operation time .

2. Constant current source circuit as defined in claim 1, which further includes a first output transistor (M6) connected to said second transistor (M2) in such a manner that it performs a current mirror operation in association with said second transistor (M2), and a second output transistor (M7) connected to said fourth transistor (M4) in such a manner that it performs a current mirror operation in association with said fourth transistor (M4).

3. Constant current source circuit as defined in claim 1 or claim 2, wherein the respective gates of said first and second transistors (M1, M2) in said first self-biasing type constant current circuit (3a) are different in area, wherein said second transistor (M2) is short-circuited between the drain and gate thereof, the respective gates of said first and second transistors (M1, M2) being connected to one another through a common connection, the source of said second transistor (M2) being connected to GND, and the source of said first transistor (M1) being connected to GND via said resistor (RS) and said fifth transistor (M5).

## Patentansprüche

1. Konstantstromquellenschaltung, umfassend:
einen ersten und einen zweiten Transistor (M1, M2), die betriebsmäßig zusammen wirken;
einen Widerstand (RS), in Reihenschaltung mit dem ersten Transistor (M1) verbunden; und
einen dritten und einen vierten Transistor (M3, M4) zum Speisen eines Stroms zum ersten und zweiten Transistor (M1, M2); wobei
die Konstantstromquellenschaltung so aufgebaut ist, dass sie eine erste Konstantstromschaltung (3a) von einem selbstvorspannenden Typ darstellt, wobei ein stabilisierter Strom erhalten wird;
wobei die Konstantstromschaltung (3a) von einem selbstvorspannenden Typ umfasst - den Widerstand (RS) und den ersten Transistor (M1) in Reihenschaltung, den zweiten Transistor (M2) zum Speisen einer gegebenen Spannung über dem Widerstand (RS) im Zusammenwirken mit dem ersten Transistor (M1) zum Erzeugen eines ersten stabilisierten Stroms (I_{R1}), der eine Referenz von einem Ausgangsstrom darstellt, den dritten Transistor (M3) in Reihenschaltung zu dem ersten Transistor (M1), und den vierten Transistor (M4) in Reihenschaltung zu dem zweiten Transistor (M2) zur Erzeugung eines Stromspiegels im Zusammenwirken mit dem dritten Transistor (M3); einen Schaltkreis (5), in Reihenschaltung zum Widerstand (RS) und zusammengesetzt aus einem fünften Transistor (M5), der gemäß einem äußeren Steuersignal ON und OFF ist; und
eine zweite Konstantstromschaltung (4), zusammengesetzt aus einem sechsten Transistor (MD) vom MOSFET-Typ, in Parallelschaltung zu einer Reihenschaltung des ersten Transistors (M1), des Widerstands (RS) und des fünften Transistors (M5), zur Erzeugung eines zweiten stabilisierten Stroms (I_{R2}), wobei der zweite stabilisierte Strom (I_{R2}) einen Startstrom für die erste Konstantstromschaltung (3a) zum Startzeitpunkt darstellt;
wobei der fünfte Transistor (M5) so ausgelegt ist, dass ein Strom, der durch den zweiten und vierten Transistor (M2, M4) verläuft, gemäß dem Zustand des fünften Transistors (M5) geändert wird, sodass ein Ausgangsstrom aus der Konstantstromquellenschaltung geändert wird;
**dadurch gekennzeichnet, dass**
der sechste Transistor (MD) von einem Depressionstyp ist; und
der zweite stabilisierte Strom (I_{R2}) einen Referenzstrom eines Ausgangsstroms zum Betriebszeitpunkt darstellt.

2. Konstantstromquellenschaltung nach Anspruch 1, die weiterhin einen ersten Ausgangstransistor (M6), verbunden mit dem zweiten Transistor (M2) in einer solchen Weise, dass er im Zusammenwirken mit dem zweiten Transistor (M2) eine Stromspiegelfunktion ausübt, und einen zweiten Ausgangstransistor (M7), verbunden mit dem vierten Transistor (M4) in einer solchen Weise, dass er im Zusammenwirken mit dem vierten Transistor (M4) eine Stromspiegelfunktion ausübt, enthält.

3. Konstantstromquellenschaltung nach Anspruch 1 oder Anspruch 2, wobei die jeweiligen Gates des ersten und zweiten Transistors (M1, M2) in der Konstantstromschaltung (3a) von einem selbstvorspannenden Typ in der Fläche unterschiedlich sind, wobei der zweite Transistor (M2) zwischen dem Drain und dem Gate davon kurzgeschlossen ist, wobei die jeweiligen Gates von dem ersten und zweiten Transistor (M1, M2) miteinander über eine gemeinsame Verbindung verbunden sind, wobei die Source von dem zweiten Transistor (M2) an GND angeschlossen ist, und die Source von dem ersten Transistor (M1) über den Widerstand (RS) und den fünften Transistor (M5) an GND angeschlossen ist.

## Revendications

1. Circuit à source de courant constant, comprenant :
- un premier et un second transistor (M1, M2) qui sont prêts à être mis en service de manière coopérative ;
- une résistance (RS) connectée en série au premier transistor (M1) ; et
- un troisième et un quatrième transistor (M3, M4) pour fournir un courant audit premier et audit second transistor (M1, M2) ; dans lequel :
- le circuit à source de courant constant est agencé de manière à constituer un premier circuit à courant constant (3a) du type à auto-polarisation dans lequel un courant stabilisé est obtenu ;
- ledit premier circuit à courant constant (3a) du type à auto-polarisation comprend ladite résistance (RS) et ledit premier transistor (M1) connecté en série, ledit second transistor (M2) pour fournir une tension donnée à travers ladite résistance (RS) en coopération avec ledit premier transistor (M1) afin de générer un premier courant stabilisé (I_{R1}) qui est une référence d'un courant de sortie, ledit troisième transistor (M3) connecté en série audit premier transistor (M1), et ledit quatrième transistor (M4) connecté en série audit second transistor (M2) pour former un réflecteur de courant en coopération avec ledit troisième transistor (M3) ;
- un circuit de commutation (5) est connecté en série à ladite résistance (RS) et est composé d'un cinquième transistor (M5) qui est ACTIVE et DESACTIVE conformément à un signal de commande externe ; et
- un second circuit à courant constant (4) composé d'un sixième transistor (MD) du type MOSFET (transistor à effet de champ à grille métal-oxyde) connecté en parallèle à une connexion en série dudit premier transistor (M1), de ladite résistance (RS) et dudit cinquième transistor (M5) afin de générer un second courant stabilisé (I_{R2}), dans lequel ledit second courant stabilisé (I_{R2}) est un courant de démarrage pour ledit premier circuit à courant constant (3a) au moment de démarrage ;
- dans lequel ledit cinquième transistor (M5) est adapté pour varier un courant qui passe à travers ledit second et ledit quatrième transistor (M2, M4), conformément à l'état dudit cinquième transistor (M5), de manière à varier un courant de sortie depuis ledit circuit à source de courant constant ;
**caractérisé en ce que** ledit sixième transistor (MD) est d'un type à dépression et **en ce que** ledit second courant stabilisé (I_{R2}) est un courant de référence d'un courant de sortie au moment de fonctionnement.

2. Circuit à source de courant constant selon la revendication 1, qui inclut en outre un premier transistor de sortie (M6) connecté audit second transistor (M2) d'une manière telle qu'il accomplit une opération de réflexion de courant en association avec ledit second transistor (M2), et un second transistor de sortie (M7) connecté audit quatrième transistor (M4) d'une manière telle qu'il accomplit une opération de réflexion de courant en association avec ledit quatrième transistor (M4).

3. Circuit à source de courant constant selon l'une ou l'autre des revendications 1 et 2, dans lequel :
- les portes respectives dudit premier et dudit second transistor (M1, M2) dans ledit premier circuit à courant constant (3a) du type à auto-polarisation sont différentes en surface ; et
- ledit second transistor (M2) est court-circuité entre le drain et la porte de ceux-ci, les portes respectives dudit premier et dudit second transistor (M1, M2) étant connectées l'une à l'autre par l'intermédiaire d'une connexion commune, la source dudit second transistor (M2) étant connectée à la terre (GND), et la source dudit premier transistor (M1) étant connectée à la terre (GND) par l'intermédiaire de ladite résistance (RS) et dudit cinquième transistor (M5).
